# EUROPEAN PATENT APPLICATION

(11) **EP 2 986 037 A1**
(43) Date of publication of application: **17.02.2016**
(21) Application number: 15179925.1
(22) Date of filing: 06.08.2015
(51) Int. Cl.: H04W 4/00, H04B 5/00, H04L 12/28, H04W 4/20, H04L 29/06, H04W 4/02, H04W 48/04

(54) **A METHOD FOR DETECTING MANIPULATION BY A USER OF A DEVICE PROVIDED WITH A COMMUNICATION TAG, CORRESPONDING COMPUTER PROGRAM PRODUCT, USER TERMINAL, DEVICE, AND SYSTEM**

(30) Priority: 14.08.2014 EP 14306275
(71) Applicant: Thomson Licensing, 92130 Issy-les-Moulineaux (FR)
(72) Inventor: BICHOT, Guillaume, 35576 CESSON-SÉVIGNÉ (FR); LOUZIR, Ali, 35576 CESSON-SÉVIGNÉ (FR)
(74) Representative: Barr, Angela Louise

(57) **Abstract**

The invention concerns a method for detecting manipulation by a user of a device (3), provided with a communication tag (5). The user wears a user terminal (10) provided with a communication tag reader, which detects the communication tag (5) associated with the device (3) as soon as the user is sufficiently close to the device. The communication tag reader (31) is activated after a local area network connection has been established between the user terminal (10) and the device (3), or between the user terminal (10) and a local area network to which the appliance is known to be connected. Through this local network connection (7), the user terminal (10) may also communicate information on the user to the device (3), which then knows who is manipulating (9) its front panel. The device (3) may access a user profile stored in the user terminal (10), in order to deliver a personalized service to the user.

## Description

### 1. Technical Field

The invention relates to the field of consumer electronic appliances or devices, notably, but non exclusively, in a context of smart life services. More precisely, the invention relates to a method for detecting manipulation by a user of a device, through its user interface.

### 2. Background

For the past decades, many research and development projects have been conducted in an attempt to facilitate the use of consumer electronic appliances or devices. Actually, the functions and functionalities of such appliances have drastically increased, both in number and in complexity. The current trend is hence to build smart appliances, which will be able to learn and understand how a user operates their user interface, in order to automatically reproduce such a behavior or such operating actions.

Taking the example of a standard TV set, it is now frequently used for other applications such as video conferencing, which could be advantageously tailored to a specific user, by taking account of his/her individual list of contacts.

For this purpose, it is necessary to provide a method allowing identifying and authenticating the user who is manipulating an appliance, either directly through the device front panel, or through a remote control (the latter being considered as a physical extension of the appliance).

Most prior art methods rely on a logon procedure, where the user establishes a secure connection with the appliance. For example, the user logs in the home TV set using some pre-registered credentials. Once the user has logged on, the appliance can infer that all actions on its user interface may be associated with this peculiar logged-on user.

However, such a logon procedure is not user friendly, as it requires the user to log out each time someone else wishes to operate the appliance, and to log in again if he/she wants to manipulate the appliance once more.

In order to ease such a logon procedure, some appliances are equipped with a camera and embed face detection software, which allows recognizing any user in front of the appliance, and to automatically log this user on. A drawback of such a face detection method is that many users consider it as very intrusive. Moreover, it may not be adequate for some public appliances, which may be manipulated by a great number of users. Last, there are many appliances, which may not embed a camera.

Another known prior art technique relies on the use of Near Field Communication (NFC) technology, as described for example in patent document WO 2013/133764. According to this document, a dedicated remote control for a digital television embeds near field communication capability, in order to exchange information with a mobile device, which also embeds near field communication capability, so as to provide user's authentication and hence customization of the digital television to a particular user.

Whenever a user wishes to configure the digital television according to his own profile, without having to go through a number of authenticating steps, he/she needs to establish radio communication between the dedicated remote control and his/her mobile device by touching them together. Using near field communication, the dedicated remote control authenticates the mobile device, which allows for an exchange of information between the mobile device and the digital television, through the dedicated remote control, and vice-versa.

A first drawback of this prior art technique is that it requires the use of a dedicated remote control, equipped with NFC capability. Therefore, it strongly impacts the appliance. Moreover, it does not work with legacy appliances, which do not embed a dedicated identification apparatus, such as a NFC reader.

Another drawback of this prior art technique is that it necessarily implies a pro-active and voluntary approach from the user, who must take an active part to the process, by touching together his/her mobile device and the remote control. Hence, such an approach is not user friendly.

Moreover, it is always possible that a user manipulates the digital television through its front panel, even after another first user has touched the dedicated remote control with his/her mobile device. There is then no way for the digital television to know who is the user manipulating its front panel, as it may be anyone, and not only the first user authenticated through near field communication via the dedicated remote control.

It would hence be desirable to provide a method for detecting manipulation by a user of a device showing improvements over the prior art.

Notably, it would be desirable to provide such a method, which would not require any complex and intrusive logon procedure. It would also be desirable to provide such a method, which would be cost effective, and would work with legacy appliances.

### 3. Summary

In one particular embodiment of the invention, a method for detecting manipulation by a user of a device provided with at least one communication tag, is proposed, which comprises:
- establishing a local or personal area network connection between a user terminal and a local or personal area network to which said device is connected;
- detecting by a communication tag reader provided at said user terminal that the user terminal is within communication range of the device by reading said at least one communication tag,
   said detecting being triggered after said network connection has been established.

The present invention thus relies on a novel and inventive approach of detecting manipulation by a user of a device or appliance, and of identifying such a user. Actually, such a method relies on a user terminal, which embeds an electronic tag reader. As soon as the user carrying or wearing the user terminal is sufficiently close to the device, the communication tag reader may read the communication tag provided at the device, and hence detect manipulation by the user of the device. Such a method works with any legacy appliance, even if it does not embed any dedicated login system, as long as a communication tag has been stuck on it. Moreover, such a method is very user friendly, as the user does not need to undertake any voluntary action.

Such a method thus provides an easy way for the user terminal and therefore for the device to associate a current human manipulation or operation through the device user interface (for example, a front panel) with a user, i.e. the owner of the user terminal.

Moreover, said detecting is triggered after a local network connection has been established between the user terminal and the local or personal area network to which said device is known to be connected. In another particular embodiment, said detecting is triggered after a local network connection has been established between said user terminal and said device.

Such a feature allows controlling the power consumption of the user terminal, and more particularly of the communication tag reader it embeds. Actually, the user terminal operates a communication tag reading attempt only after it has established a network connection with either a local or personal area network to which the device is connected or directly with the device through said local or personal area network. For example, when a user comes home, his/her user terminal connects to the home WiFi network (WLAN), to which his/her TV set and washing machine are also connected. After such a network connection is established, the user terminal may trigger a communication tag read attempt, to detect whether the user is close from either the TV set or the washing machine (or more generally any other domestic appliance). To the contrary, when the user is away from home and not connected to any other public or private LAN or PAN, the user terminal does not activate its communication tag reader, and hence saves power.

By user terminal, it is meant here and throughout this document, any wearable device comprising at least a wearable processing unit. Such a wearable processing unit may be integrated with or wirelessly connected with a portable screen. Among others, such a user terminal could be a smartphone, a pad or tablet, a computer, a mobile phone...

By device, it is meant here and throughout this document, any electronic appliance or device, whether it is a private consumer device or a public device. Among others, such a device could be an advertising panel in a bus, a Personal Computer, a washing machine, a TV set, a coffee machine, ... By extension, a device could also be a remote control associated with an electronic device, for example the remote control associated with a TV set.

By communication tag, it is meant here and throughout this document, any low field, preferably passive, communication tag, which detection range is short enough for detecting that a user is close enough from a device for manipulating it. Among others, such a communication tag could be a RFID communication tag, a Bluetooth Low Energy communication tag, a NFC communication tag, ...

According to an embodiment of the invention, such a method also comprises transmitting information about the user, through said network connection between said user terminal and said device, to the device.

Through the network connection established between the user terminal and the device, the user terminal may send information to the device, whenever the communication tag associated with the device is detected. The device then knows who is manipulating its front panel, without any need for a complex and lengthy logon procedure.

When the user is close enough from a device equipped with a communication tag, the communication tag reader embedded in the user terminal identifies uniquely the device. The associated identifier must have been pre-communicated to the user terminal. To this purpose, according to a further embodiment of the invention, such a method also comprises storing together in said user terminal:
- an identifier of said device provided by said communication tag;
- information for establishing said network connection with said device.

The identifier associated with the device may have been provided to the user terminal, either through a preliminary configuration procedure, or through any known mechanism based for example on a home network protocol, such as UPnP (for "Universal Plug and Play")/DLNA (for Digital Living Network Alliance") or Qeo^{®} (home network protocol developed by Technicolor^{®}).

According to a further embodiment of the invention, said method also comprises collecting one or more user's actions on the device and recording said one or more user's actions within a user profile maintained within the user terminal.

It is hence possible for the user terminal to build a very rich user profile, gathering all the home network protocol events generated by the device as a consequence of the user manipulation through the device user interface.

Actually, according to a first embodiment of the present invention, said user's actions are derived from messages generated by and received from said device and associated with an identifier of said device, while said user terminal remains within communication range of the device.

In other words, the user terminal associates the identifier of the device, as given by the associated communication tag, with the home network protocol events generated by the device as a consequence of the user manipulation through the device front panel. As long as the user terminal can sense or detect the device communication tag, it assumes it is the user who is manipulating the device front panel, and it keeps updating the user profile with the messages generated by and received from the device.

According to a second embodiment of the present invention supporting multiple users, said user's actions are derived from messages generated by and received from said device and associated with both an identifier of said device and an identifier of said user or of said user terminal.

Actually, it is possible that several users operate the same device at the same time, with a need for discriminating those users. According to this embodiment, the network protocol transporting the messages generated by the user manipulation of the device user interface (whether the front panel of an electronic device, or a remote control panel) link to the messages an identifier of the person or apparatus controlling the device. This identifier is communicated, to the device, by the user terminal corresponding to the user that is indeed sufficiently close to the associated panel for detecting the communication tag.

According to yet a further embodiment of the invention, said detecting comprises:
- setting a power of said communication tag reader to a threshold corresponding to a minimum detection range;
- increasing said power for increasing said detection range.

Such an embodiment is advantageous in case the user terminal is connected to several devices (e.g. at home, to the oven, the computer, and the cooking robot), in order to detect the device the user is potentially controlling manually. To this purpose, the communication tag reader starts scanning with a very short detection range, and enlarges gradually its detection range until it detects a communication tag. It is also possible to use different classes of communication tags with different sensitivities corresponding to different types of devices. Once the communication tag reader detects a communication tag, it reads the associated identifier, and hence identifies the device type and category, and concludes whether the user is actually located in front of or close to the device or not.

According to yet a further embodiment, it is also possible that some devices are also equipped with communication tag readers, while communication tags are also provided on user terminals. In such an embodiment, the method comprises:
- reading by a communication tag reader embedded in/provided at said device a communication tag provided on said user terminal;
- sending to said user terminal, through said local or personal network connection between said device and said user terminal, a message signaling that said user terminal is within communication range of said device.

It may be the case notably when two user terminals, both equipped with communication tags and communication tag readers, are close to each other, one playing the role of a user terminal, and the other playing the role of a device.

In this embodiment, the device signals to the user terminal the physical proximity detection through a dedicated control message. As many domestic or public devices are usually connected to an electrical supply network, the power consumption issue is not as important as for user terminals. Such a message issued by the device towards the user terminal may be another interesting way of triggering any read attempt by the communication tag reader of the user terminal, as an alternative to any prior network connection establishment.

According to yet a further embodiment, such a method also comprises operating said user profile for delivering a personalized service to the user by said device.

The device may access the user profile stored in the user terminal, through the network connection between them, in order to customize the service it offers to the user.

According to yet a further embodiment, said device is provided with at least two communication tags.

Using two or more tags, possibly with different orientations, may allow for some kind of antenna or path diversity and may help reduce multipath frequency selective fading, which often occurs in some wireless communications such as Wi-Fi^{®} for example.

While not explicitly described, the present embodiments may be employed in any combination or sub-combination.

The present invention furthermore relates to a computer program product downloadable from a communications network and/or stored in a computer-readable carrier and/or executable by a microprocessor, comprising program code instructions for the execution of the method for detecting manipulation by a user of a device as described above, when it is executed on a computer.

The present invention furthermore relates to a user terminal comprising:
- a network interface module for establishing a local or personal area network connection with a device;
- a communication tag reader for reading at least one communication tag provided at said device, and for detecting that the user terminal is within communication range of the device;
- a memory for storing a user profile;
- a processor for updating said user profile with at least one user action derived from one or more messages triggered by user's actions on said device and generated by said device and received through said network connection by a receiving module of said network interface module.

According to an embodiment of the invention, such a network interface module also comprises a transmitter for transmitting information about the user, through said network connection between said user terminal and said device, to the device.

All features of the description of the user terminal described above in relation to embodiments of the method for detecting manipulation by a user of a device also apply to such a user terminal.

The present invention furthermore relates to a device comprising a user interface operable by a user and a network interface for establishing a network connection between said device and a user terminal, wherein said device also comprises:
- at least one communication tag for being read by a communication tag reader provided on said user terminal;
- a receiver for receiving information from said user terminal about said user, if said user terminal is detected as being within communication range of the device by said communication tag reader;
- an access module for accessing a user profile stored in said user terminal on the basis of said received information;
- a processing module for delivering a personalized service to the user on the basis of said user profile.

All features of the description of the device described above in relation to embodiments of the method for detecting manipulation by a user of a device also apply to such a device.

The present invention furthermore relates to a system for detecting manipulation by a user of a device, on which at least one communication tag is provided,
said system comprising said device and a user terminal, and comprising:
- a network interface module for establishing a local or personal area network connection with said device;
- a communication tag reader, activated after said network connection has been established, for reading the communication tag provided on the device, and for detecting that the user terminal is within communication range of the device.

According to an embodiment of the present invention, said network interface module comprises a transmitter for transmitting information about the user to the device, through said network connection, and said device further comprises:
- a receiver for receiving said information about the user;
- an access module for accessing a user profile stored in said user terminal on the basis of said received information;
- a processing module for delivering a personalized service to the user on the basis of said user profile.

All features of the description of the user terminal and the device described above in relation to embodiments of the method for detecting manipulation by a user of a device also apply to such a system.

### 4. Brief description of Drawings

The invention can be better understood with reference to the following description and drawings, given by way of example and not limiting the scope of protection, and in which:
- Figure 1 shows a system for detecting manipulation by a user of a device according to an embodiment of the invention, in the context of a home network comprising a digital television;
- Figure 2 shows a flow chart describing the main steps of a method according to an embodiment of the invention;
- Figure 3 illustrates the structure of a user terminal implemented in the system of figure 1;
- Figure 4 illustrates the structure of a device implemented in the system of figure 1.

The components in the figures are not necessarily to scale, emphasis instead being placed upon illustrating the principles of the invention.

### 5. Description of Illustrative Embodiments

The method for detecting manipulation by a user of a device according to embodiments of the invention relies on the first assumption that users always wear their wearable user terminals, i.e. personalized computer units such as Smartphones. Devices, whether private or public devices, are equipped with communication tags, such as passive RFID (for Radio Frequency Identification) tags. Such tags are small and can be easily attached (e.g. pasted) on any legacy appliance. To measure the distance between the user and a device, the method according to embodiments of the invention exploits the communication range associated with such communication tags. It also relies on the further assumption, that if the user is sufficiently close to the device (e.g. 50 cm or less), then he/she is the one who is manipulating the device.

As will be appreciated by one skilled in the art, aspects of the present principles can be embodied as a system, method or computer readable medium. Accordingly, aspects of the present principles can take the form of an entirely hardware embodiment, an entirely software embodiment (including firmware, resident software, micro-code, and so forth), or an embodiment combining software and hardware aspects that can generally be referred to herein as a "circuit", "module" or "system". Furthermore, aspects of the present principles can take the form of a computer readable storage medium. Any combination of one or more computer readable storage medium(s) may be utilized.

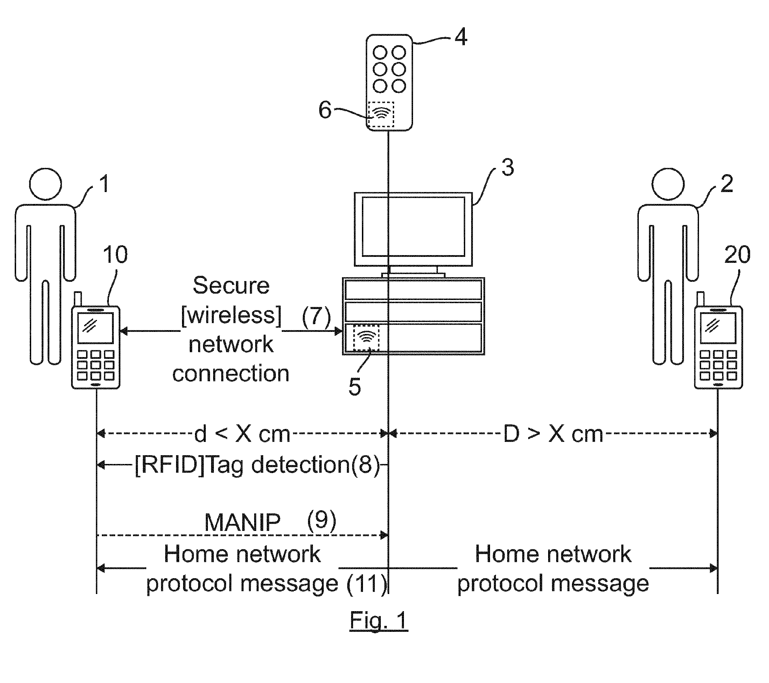

**Figure 1** illustrates a particular embodiment of the invention, in the context of a home network, where one or several users may manipulate or operate several domestic devices (coffee machine, Personal Computer, washing machine, oven, fridge, TV set...). The system of **figure 1** more particularly focuses on the manipulation of a digital television. However, the following description will be easily extended to any other type of domestic device. It must also be noted that other embodiments of the invention may of course occur in a public context, like, for example, in a train station, or in a bus, with devices such as advertising panels or soda dispensers.

The system of **figure 1** comprises:
- a digital television 3 equipped with a RFID tag 5;
- a remote control 4 for digital television 3, also equipped with a RFID tag 6;
- a Smartphone 10 belonging to and worn by a user 1. Smartphone 10 is equipped with a RFID tag reader;
- a Smartphone 20 belonging to and worn by a user 2. Smartphone 20 is also equipped with a RFID tag reader.

Although not illustrated in **figure 1****,** digital television 3 (along with other domestic appliances not shown on **figure 1****)** is part of a home network, such a Wireless Local Area Network using the Wi-Fi^{®} communication standard.

When user 1 enters his home, his/her Smartphone 10 connects automatically to his/her WLAN. Smartphone 10 discovers the home network and becomes associated with digital television 3, through a network connection 7, which may be a secure wireless network connection.

Digital television 3 becomes aware of the user presence in the home and can access to his/her profile for e.g. setting up his/her personal configuration (e.g. switch to user 1 preferred channel).

The same applies for user 2 and his/her Smartphone 20, when coming home.

When user 1 moves into the living room where digital television 3 stands, he/she may decide to change channel or increase the volume by operating the TV set remote control 4 or TV set 3 front panel. Such actions, either on front panel or on remote control 4, must be saved in user 1 profile.

When user 1 holds remote control 4, or gets close to digital television 3, his/her Smartphone 10 detects RFID 6 or RFID 5. For example, user 1 gets to a distance d from digital television 3, where d<X cm, where X stands for the detection range of RFID tag 5 attached to (e.g. pasted on) digital television 3. The RFID tag reader embedded in Smartphone 10 detects (8) RFID 5. It reads the identifier associated with RFID 5, and finds for example in a look-up table stored in Smartphone 10, that it corresponds to an identifier of digital television 3.

As may be observed on **figure 1****,** user 2 remains at a distance D>X cm from digital television 3 and remote control 4. Smartphone 20 does not detect, neither RFID 5 nor RFID 6.

When user 1 manipulates (9) the TV front panel, digital television 3 generates events messages, e.g. DLNA messages or Qeo^{®} messages for signaling channel switch or volume up/down. These home network protocol messages 11 are sent on the home network, and received by Smartphone 10, where they are recorded and associated with user 1 profile. This holds true as long as Smartphone 10 can sense or detect RFID 5 or RFID 6. If sensing fails, or if a new RFID is detected by Smartphone 10, the association between user 1 and digital television 3 ends.

Smartphone 20 may also receive the home network protocol messages 11 generated by digital television 3. However, they are discarded by Smartphone 20, since user 2 has not been detected as close enough to digital television 3.

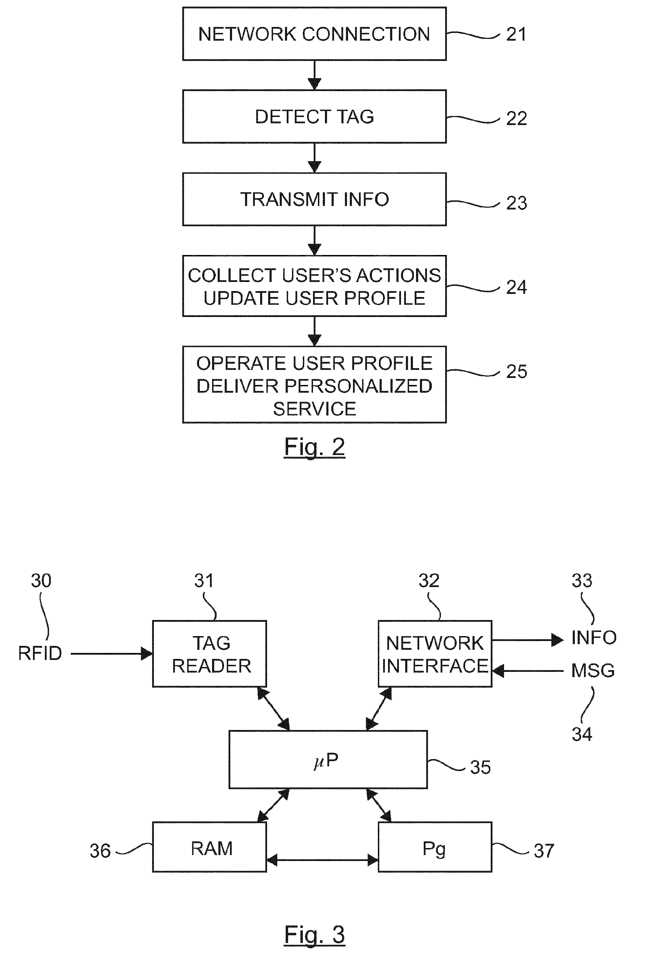

As will be disclosed in more details in relation to **figure 2****,** digital television 3 may operate the user profile stored in Smartphone 10 to deliver a personalized service to user 1.

**Figure 2** illustrates in the form of a schematic flow chart some of the steps of the method for detecting manipulation by a user of a device according to an embodiment of the invention. Some of these steps have already been described in relation to **figure 1****;** yet, they are presented in a synthetic form in **figure 2****.**

At step 21, a local area network connection is established between Smartphone 10 and digital television 3, for example when user 1 enters his/her home, and his/her Smartphone automatically connects to his/her home WLAN.

Establishing such a network connection triggers a read attempt by the RFID tag reader embedded in Smartphone 10; before then, no read attempt was activated, in order to reduce power consumption by Smartphone 10.

When user 1 gets close enough to digital television 3 (d<X cm), Smartphone 10 detects RFID tag 5 attached to (e.g. pasted on) digital television 3, at step 22.

Smartphone 10 may then transmit information on user 1 to digital television 5, at step 23. Such information may comprise an identifier of user 1, as well as information collected in a user profile of user 1.

All subsequent event messages generated by digital television 3 and sent over the home network are considered by Smartphone 10 as having been triggered by actions operated by user 1 on the digital television front panel. Actually, user 1 is considered as close enough to digital television 3 for being the person manipulating or operating the TV set.

Furthermore, the digital television 3 may send, linked with event messages, the identifier representing the identity of the user 1 (or his smartphone 10).

All the messages of the home network protocol received from digital television 3 (recognized as such since they bear an identifier of digital television 3) are collected as user 1's actions at step 24, and gathered in a user profile stored in Smartphone 10.

At step 25, digital television 3 may deliver to user 1 a personalized service, thanks to the information retrieved from user 1' profile. For example, digital television may switch to user 1 favorite channel.

The system and method of **figures 1** **and** **2** also apply in a context of multiple users, as will be described further below.

Let's assume, on figure 1, that both users 1 and 2 are close enough to digital television 3 or remote control 4 for being detected by Smartphones 10 and 20 as possibly manipulating digital television 3. For example, user 1 is at a distance d<X cm from RFID 5 attached to (e.g. pasted on) digital television 5, while user 2 is at a distance D<X' cm from RFID 6 attached to (e.g. pasted on) remote control 4, where X' is the detection range associated with RFID 6.

Smartphones 10 and 20 must be able to associate home network protocol messages 11 with their respective sources (i.e. user 1 or user 2). Smartphone 10 must only record the TV set events linked with user 1 manipulation of the digital television 3 front panel while smartphone 20 must only record the TV set events linked with user 2 manipulation of remote control 4.

To this purpose, once Smartphone 10 has detected RFID 5, it can signal this detection to digital television 3 through local area network connection 7 (e.g. as part of the home network protocol). In the further steps, the home network protocol (e.g. DLNA/UPnP, Qeo^{®}, Bonjour...) transporting the messages consecutive to the user manipulation of the front panel must link to the messages an identifier of user 1 or of Smartphone 10. Smartphone 10 will hence be able to discriminate, among the home network protocol messages 11 it receives, those originating from user 1 from those originating from user 2.

If user 2 uses Smartphone 20 to remotely control digital television 3, rather than remote control 4, the home network protocol must carry an identification of the control source. In other words, subsequent home network protocol events 11 associated with user 2 remote control must either carry an identifier of user 2 or of Smartphone 20.

If the control/home network protocol is not capable of transporting the ID associated with the control source (whether the originator device or user) with the protocol messages, then it preferably should be forbidden to accept more than one secure connection between the target appliance (i.e. digital television 3) and Smartphones 10, 20.

Embodiments of the invention may rely on any type of secure connection and any type of home network protocol connection, which do not form part *per se* of the present disclosure. The one skilled in the art will easily chose an appropriate protocol/media offering a secure connection service for establishing a secure connection between the digital television and the smartphone, as well as a protocol/media offering a control protocol for establishing the home network protocol connection. The one skilled in the art may also consider having the home network protocol connection and the secure connection transported over the same medium and even as part of the same protocol.

In a further embodiment of the invention, Smartphones 10 and 20 may embed RFID tags, which are not illustrated in **figure 1****,** while digital television 3 is equipped with a RFID tag reader.

Hence, RFID tag reader embedded in Smartphone 10 may detect RFID tag provided on Smartphone 20, which is seen as a device. Proximity detection of both Smartphones 10 and 20 provides a way of detecting user proximity.

Moreover, when user 1 gets close to digital television 3, the RFID tag reader embedded in digital television 3 detects the RFID tag of Smartphone 10. It then attaches an identifier of user 1 or of Smartphone 10, as indicated by the RFID tag it has just read, with the subsequent control protocol messages associated with user 1 manipulation of its physical interface or front panel.

Alternatively, or in addition, digital television 3 signals to Smartphone 10 the physical proximity detection through a dedicated control message.

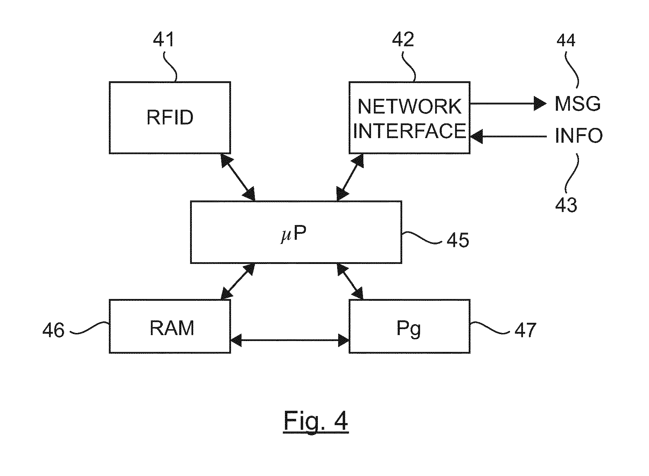

**Figures 3** **and** **4** respectively present schematic diagrams of a user terminal and of a device according to embodiments of the invention.

Regarding **figure 3****,** a user terminal according to the invention comprises a memory 36 comprising a buffer memory RAM, a processing unit 35 equipped for example with a microprocessor µP and driven by the computer program 37 implementing the method for detecting manipulation by a user of a device according to embodiments of the invention.

At initialization, the code instructions of the computer program 37 are for example loaded into a RAM and then executed by the processor of the processing unit 35.

According to an embodiment of the invention, the microprocessor of the processing unit 35 implements the steps of the method for detecting manipulation by a user of a device described here above according to the instructions of the computer program 37. To this end, the user terminal comprises a communication tag reader 31 operable to read a RFID tag 30 associated with an appliance or device, as well as a network interface module 32 comprising both a receiver and a transmitter. Once a network connection has been established by network interface module 32 with a local area network to which is connected a target appliance, microprocessor 35 activates the communication tag reader 31. As soon as the tag reader is close enough to a RFID tag 30, it detects that the user is close enough to the device for being assumed to be the one who manipulates it. Through the transmitter of network interface module 32, the microprocessor 35 sends information on the user INFO 33 to the appliance. The home network protocol events generated by the appliance subsequent to the user's actions on the appliance front panel are received in the form of messages MSG 34 by the receiver of network interface module 32. They are stored by microprocessor 35 in memory 36 as part of the user's profile.

These modules are controlled by the microprocessor of the processing unit 35; they may be hardware or software modules or a combination of both hardware and software elements.

Regarding figure 4, a device according to the invention comprises a memory 46 comprising a buffer memory RAM, a processing unit 45 equipped for example with a microprocessor µP and driven by the computer program 47 implementing the method for detecting manipulation by a user of a device according to embodiments of the invention.

At initialization, the code instructions of the computer program 47 are for example loaded into a RAM and then executed by the processor of the processing unit 45.

According to an embodiment of the invention, the microprocessor of the processing unit 45 implements the steps of the method for detecting manipulation by a user of a device described here above according to the instructions of the computer program 47. To this end, the appliance comprises a preferably passive communication tag RFID 41 (for example RFID tags 5 or 6 of **figure 1**), which may be read by the communication tag reader 31 of the user terminal of **figure 3****.** It also comprises a network interface module 42 for establishing a network connection with the user terminal of **figure 3****.** User's actions on the device front panel or remote control trigger home network protocol events generated by microprocessor 35 in the forms of messages MSG 44 sent by a transmitter of the network interface module 42 over the home network. Messages MSG 44 sent by the device of **figure 4** are the same as messages MSG 34 received by the user terminal of **figure 3****.**

A receiver of network interface module 42 also allows the device to receive information on the user who is manipulating its front panel or remote control, INFO 43. Information INFO 43 received by the appliance of **figure 4** is the same as information INFO 34 sent by the user terminal of **figure 3****.** Such information INFO 43 is processed by microprocessor 45, and may be at least temporarily stored in memory 46, in order for the device to deliver a personalized service to the user.

The above-described modules are controlled by the microprocessor of the processing unit 45; they may be hardware or software modules or a combination of both hardware and software elements.

Thus, for example, it will be appreciated by those skilled in the art that the block diagrams presented herein represent conceptual views of illustrative system components and/or circuitry embodying the principles of the invention. Similarly, it will be appreciated that any flow charts, flow diagrams, state transition diagrams, pseudo code, and the like represent various processes which may be substantially represented in computer readable storage media and so executed by a computer or processor, whether or not such computer or processor is explicitly shown.

Communication tags used in embodiments of the invention may be RFID tags, NFC tags, Bluetooth Low Energy communication tags, ...

It must be recalled that RFID systems can be subdivided in two major categories depending on the type of coupling between the tag reader and the tag:
- some RFID systems are based on inductive coupling (Near field): these systems operate generally at Low Frequency (LF= 125 kHz) and High Frequency (HF=13.56 MHz), the communication ranges typically equal to the size of the antenna(s). It requires either a rather large reader antenna (as e.g. a RFID enabled gantry) or extremely short distance such as required with NFC;
- some RFID systems are based on radiative coupling: these systems operate at Ultra High Frequency (the UHF band in the USA is 902-928 MHz and in Europe, 865-868MHz) or in microwave bands (2.4 GHz and 5.8 GHz). Longer ranges up to several meters are allowed in these bands with the advantage of smaller antenna sizes, cheaper tags and faster read rates. The reading range is determined by the reader and tag sensitivities and the power allowed by regulation, which is different in the USA (up to 4W of Effective Isotropic Radiated Power (EIRP)) and in Europe (up to 0.5 W of EIRP).

Embodiments of the present invention will use a long range RFID system operating in the UHF bands associated with low cost passive tags, which could be attached to (e.g. pasted on) the front of the device, based on the EPCglobal^{®} Gen 2 protocol (UHF Air Interface Protocol Standard Generation 2 as proposed by the GS1 group and first published by EPCglobal^{®} in 2004, which defines the physical and logical requirements for an RFID system of interrogators and passive tags, operating in the 860 MHz-960 MHz UHF range).

Depending on the device/appliance usage, the reading range could be adjusted in two ways:
- First, by using different classes of RFID tags with different sensitivities (higher is the sensitivity of the passive tag, longer is the reading range) corresponding to different classes of products. The coffee machine requires a small range RFID tag whereas a washing machine requires a longer range one. The sensitivity of the tag could be changed by using more or less sensitive RFID chips or by using different antenna sizes and efficiencies. The power transmitted by the RFID embedded reader is assumed constant, fixed by the Smartphone manufacturer and compliant with local regulation;
- Then, by modifying the reader transmitted power, assuming the *a priori* knowledge of the distance interval between the smartphone and the device. Assuming the Smartphone is connected (through the above-mentioned secure connection 7) with a device according to the embodiment of **figure 1****,** the Smartphone can configure the electronic tag reader in a way it gets a transmission range compatible with the device (maximum X centimeters in **figure 1**).

In case the Smartphone is connected to several devices (e.g. oven, computer, cooking robot), a progressive scan algorithm may be used for detecting the device the user is potentially controlling manually. To this purpose, the reader starts to scan for RFID tags with a very short detection range and enlarges it gradually, until it detects a tag. Depending of the tag identifier, the reader detects the device type and category and decides whether the user is actually located in front of/close to the device or not.

While the UHF RFID systems are well suited for embodiments of the invention, they may suffer from multipath frequency selective fading well known in Wi-Fi^{®}. To mitigate this problem, more than one tag could be attached to the device (for example on two edges of digital television 3) possibly with different orientations and thus getting benefit from some kind of antenna/path diversity. This is possible given that RFID systems have the ability to read several tags at once. The additional cost is still marginal. Of course, all the ID codes of the RFID tags stuck on the same device are associated with the same device.

Embodiments of the invention have been illustrated in the peculiar context of a home network, where a user manipulates a digital television through its front panel. Of course, this is not limitative to the many applications and contexts of embodiments of the invention. As a mere example, another embodiment of the invention could take place in a train station, where a user could manipulate a public appliance such as a soda dispenser. The read attempt of the Smartphone embedded tag reader could then be triggered either based on the cell ID of a radio communication network in which the soda dispenser is located, or on a network connection established between the user's smartphone and a public Wi-Fi network in the train station. The Smartphone, after having detected the RFID tag attached to (e.g. pasted on) the soda dispenser, and inferred that the user was the one manipulating the soda dispenser, could send information about the user to the soda dispenser, which could, in turn, automatically deliver the user's favorite drink.

## Claims

1. A method for detecting manipulation by a user of a device (3), provided with at least one communication tag (5),
said method comprising:
- establishing a local or personal area network connection (7) between a user terminal (10) and a local or personal area network to which said device (3) is connected;
- detecting (8; 22) by a communication tag reader (31) provided at said user terminal (10) that the user terminal (10) is within communication range of the device by reading said at least one communication tag (5,6; 41);
said detecting being triggered after said network connection has been established.

2. The method of claim 1, further comprising transmitting (23) information about the user, through said network connection (7) between said user terminal (10) and said device (3), to the device (3).

3. The method of claim 1 or 2, further comprising collecting (24) one or more user's actions on the device (3) and recording said one or more user's actions within a user profile maintained within the user terminal.

4. The method of claim 3, wherein said user's actions are derived from messages (11; 34) generated by and received from said device (3) and associated with an identifier of said device (3), while said user terminal (10) remains within communication range of the device (3).

5. The method of claim 3, wherein said user's actions are derived from messages (11; 34) generated by and received from said device (3) and associated with both an identifier of said device (3) and an identifier of said user or of said user terminal (10).

6. The method of any one of claims 1 to 5, wherein said detecting comprises:
- setting a power of said communication tag reader to a threshold corresponding to a minimum detection range;
- increasing said power for increasing said detection range.

7. The method of any one of claims 1 to 6, further comprising:
- reading by a communication tag reader provided at said device (3) a communication tag provided on said user terminal (10);
- sending to said user terminal (10), through said network connection between said device (3) and said user terminal (10), a message signaling that said user terminal (10) is within communication range of said device (3).

8. The method of any one of claims 1 to 7, further comprising operating (25) said user profile for delivering a personalized service to the user by said device (3).

9. The method of any one of claims 1 to 7, wherein said device (3) is provided with at least two communication tags.

10. Computer program product downloadable from a communications network and/or stored in a computer-readable carrier and/or executable by a microprocessor, comprising program code instructions for the execution of the method for detecting manipulation by a user of a device (3) according to at least one of the claims 1 to 9, when it is executed on a computer.

11. A user terminal (10) comprising:
- a network interface module (32) for establishing a local or personal area network connection with a device (3);
- a communication tag reader (31) for reading at least one communication tag provided on said device (3), and for detecting that the user terminal is within communication range of the device;
- a memory (36) for storing a user profile;
- a processor (35) for updating said user profile with user's actions derived from one or more messages (34) triggered by user's actions on said device (3) and generated by said device (3) and received through said network connection by a receiving module of said network interface module (32).

12. A user terminal according to claim 11, wherein said network interface module (32) also comprises a transmitter (32) for transmitting information (33) about the user, through said network connection between said user terminal (10) and said device (3), to the device (3).

13. A device (3) comprising a user interface operable by a user and a network interface (42) for establishing a network connection between said device (3) and a user terminal (10), wherein said device (3) also comprises:
- at least one communication tag (41) for being read by a communication tag reader (31) provided on said user terminal (10);
- a receiver for receiving information (43) from said user terminal (10) about said user, if said user terminal (10) is detected as being within communication range of the device (3) by said communication tag reader (31);
- an access module for accessing a user profile stored in said user terminal (10) on the basis of said received information (43);
- a processing module (45) for delivering a personalized service to the user on the basis of said user profile.

14. A system for detecting that a user is manipulating a device (3), on which at least one communication tag (41) is provided,
said system comprising said device (3) and a user terminal (10), and comprising:
- a network interface module (32) for establishing a local or personal area network connection with said device (3);
- a communication tag reader (31), activated after said network connection has been established, for reading the communication tag (41) provided on the device (3) and for detecting that the user terminal (10) is within communication range of the device (3).

15. The system of claim 14, wherein said network interface module (32) comprises a transmitter for transmitting information about the user to the device (3), through said network connection, and wherein said device (3) further comprises:
- a receiver for receiving said information about the user;
- an access module for accessing a user profile stored in said user terminal (10) on the basis of said received information;
- a processing module (45) for delivering a personalized service to the user on the basis of said user profile.
